# EUROPÄISCHE PATENTSCHRIFT

(11) **EP 3 966 553 B1**
(45) Veröffentlichungstag und Bekanntmachung des Hinweises auf die Patenterteilung: **19.08.2026**
(21) Anmeldenummer: 20726733.7
(22) Anmeldetag: 08.05.2020
(51) Int. Cl.: G01N 21/41, G01N 21/85, G01N 21/43

(54) **INLINE-REFRAKTOMETER, INSBESONDERE ZUR ERMITTLUNG DER WASSERANTEILE EINER FLÜSSIGKEIT, INSBESONDERE EINES KÜHLSCHMIERSTOFFES**
INLINE-REFRACTOMETER, IN PARTICULAR FOR DETERMINING THE WATER CONTENT IN A LIQUID, IN PARTICULAR IN A COOLANT
REFRACTOMETRE EN LIGNE, EN PARTICULIER POUR DETERMINER LA TENEUR EN EAU D'UN LIQUIDE, EN PARTICULIER D'UN LIQUIDE DE REFROIDISSEMENT

(30) Priorität: 08.05.2019 DE 102019206613
(43) Veröffentlichungstag der Anmeldung: 16.03.2022
(73) Patentinhaber: NewFluid GmbH, 68165 Mannheim (DE)
(72) Erfinder: TILZ, Wolfgang, 68723 Schwetzingen (DE)
(74) Vertreter: Wohlfahrt, Jan Günther
(86) Internationale Anmeldenummer: PCT/EP2020/062912
(87) Internationale Veröffentlichungsnummer: WO 2020/225433

(56) Entgegenhaltungen:
- DE-A1- 102010 028 319
- FR-A1- 2 548 370
- FR-A1- 2 626 075
- US-A1- 2016 187 255

## Beschreibung

Die Erfindung betrifft eine Inline-Brechungsindexmessung, insbesondere eine Inline-Konzentrationsmessung zur Ermittlung der Wasseranteile einer Flüssigkeit, insbesondere aus Kühlschmierstoffen im Einsatz in der Zerspanungsindustrie

Konzentrationsmessungen von Flüssigkeiten, insbesondere aus Kühlschmierstoffen sind in der Zerspanungsindustrie wichtig, da die Konzentration des Öl-Anteils eines Kühlschmierstoffs abhängig von dem zu bearbeitenden Werkstoff, Werkzeug oder Bearbeitungsverfahren ist. Zur Messung der Konzentrationen werden Refraktometer eingesetzt. Mit Refraktometern können anhand des Winkels der Lichtbrechung die Eigenschaften von Flüssigkeiten bestimmt werden. Das optische Messgerät zeigt mithilfe der Lichtbrechung die jeweilige Konzentration von festen oder flüssigen Körpern an. Solche Refraktomenter sind aus der FR 2 626 075 A1, der FR 2 548 370 A1 und der DE 10 2010 028319 A1 bekannt.

Es gibt drei Arten von Refraktometern: Handrefraktometer, digitaler Refraktometer und Inline-Refraktometer. Mit dem Handrefraktometer kann der Wassergehalt von Emulsionen wie etwa Bohremulsionen, Schneideölen oder Kühlschmierstoffe z.B. im CNC-Bereich bestimmt werden, aber auch der Zuckergehalt in Obst, Trauben, Gemüse, Früchten, Limonaden und durchscheinenden Fruchtsäften. Das Handrefraktometer ermöglicht, aufgrund des integrierten Temperaturausgleichsystems ein genaueres Ergebnis, da sich das Messergebnis bei einer Temperatur-Zunahme verändert. Vor einer Messung müssen das Prisma und der Prisma-Deckel vorsichtig gereinigt und getrocknet werden. Danach müssen mittels Pipette 1-2 Tropfen der Probe auf das Prisma gegeben werden und der Prisma-Deckel geschlossen werden. Hierbei verteilt sich die Probe gleichmäßig zwischen Deckel und Prisma. Dabei ist darauf zu achten, dass sich keine Luftbläschen bilden. Dieses würde das Messergebnis negativ beeinträchtigen. Durch leichtes Bewegen des Klappdeckels lässt sich die Probenflüssigkeit gleichmäßig verteilen. Danach wird das Refraktometer gegen Tageslicht gehalten, um die Skala durch das Okular zu sehen. Der gewünschte Wert kann dann direkt abgelesen werden. Da sich auf dem Prisma und dem Deckel Ablagerungen bilden können, muss das Gerät nach jedem Messvorgang sorgfältig gereinigt und getrocknet werden, damit bei der nächsten Messung keine Verfälschungen auftreten. Jedoch ist die Handhabung sehr unkompliziert.

Ein digitales Refraktometer ist ein wasserdichtes Handmessgerät, das zur Bestimmung der Konzentration mit einem Messbereich von 0 bis 90 % verwendet werden kann. Die Messung erfolgt nicht über eine Skala, sondern über Sensoren, insbesondere CCD Sensoren. Das Messergebnis und die Temperatur des zu messenden Mediums werden digital angezeigt. Hierbei wird die Probe in eine Messmulde eingeträufelt, dabei muss die Linse nicht abgedeckt werden.

Inline-Prozessrefraktometer messen den Brechungsindex von Flüssigkeiten kontinuierlich und ermitteln die Konzentration und das Mischungsverhältnis von zwei Massenverhältnissen. Die Messung erfolgt in Echtzeit und erlaubt so eine permanente Kontrolle im Prozess. Die Messung ist unabhängig von Trübung, Farbe und Viskosität, dadurch ist der Prozess permanent überwacht. Inline-Prozessrefraktometer können in Rohrleitungen, Mischtanks, Vorratsbehältern unter Verwendung verschiedenster Anschlussverbindungen eingebaut werden und sind somit für den Einsatz in der verarbeitenden Industrie geeignet.

Handrefraktometer und digitale Refraktometer müssen vom Bediener mit einer Messprobe versehen werden. Die Messungen und die Proben sind immer nur so genau wie die Qualität der Ausführung. Problematisch ist z.B. das Eintauchen einer Pipette in eine Emulsion, wie es bei Kühlschmierstoffen oft vorkommt, da dann das aufschwimmende Fremdöl an der Pipette anhaften und die Messung verfälschen kann. Daher ist eine Messung mit dem Handrefraktometer auch nur eine Kontrollmessung. Bei Prozesssteuerungen können diese Messgeräte nicht eingesetzt werden.

Handrefraktometer sind meist mit einer Auflösung von 0 - 10 % und mit einer Teilung von 0,1 % ausgestattet, Dieser Konzentrationswert ist in der Genauigkeit mit dem Inline-Prozessrefraktometer vergleichbar.

Die Messwerte werden üblicher Weise in Brix angegeben. Eine Flüssigkeit hat ein Grad Brix (= 1 % Brix), wenn sie dieselbe Dichte hat wie eine Lösung von 1 g Saccharose in 100 g Saccharose/Wasser-Lösung; sie hat 10 Brix (= 10 % Brix), wenn ihre Dichte die einer Lösung von 10 g Saccharose in 100 g Saccharose/Wasser-Lösung (entspricht einer 10 %-igen Lösung) ist. Saccharose-Lösung ist hierbei nur die Vergleichssubstanz, die untersuchte Flüssigkeit muss keine Saccharose enthalten.

Ein analoges Handrefraktometer ist etwa 100-fach billiger als ein Inline Refraktometer.

Der Erfindung liegt die technische Aufgabe zugrunde, ein Inline-Refraktometer vorzuschlagen, das hinsichtlich Aufbau, Wirkungsweise und Kosten günstiger ist als die bekannten Inline-Refraktometer.

Dabei soll insbesondere bei der Inline-Messung der Wasseranteile in Kühlschmierstoffen die Bildung von Ablagerungen am Refraktometer verringert werden, so dass die Messungen über einen längeren Zeitraum und/oder genauer durchgeführt werden können.

Dieses technische Problem dadurch wird gelöst, dass ein analoges Handrefraktometer als Inline-Refraktometer eingesetzt wird. Durch diese erfindungsgemäße Lösung wird das analoge Handrefraktometer in eine Rohrleitung eingebaut.

Die Erfindung betrifft eine Inline-Refraktometer-Einheit nach Anspruch 1.

Erfindungsgemäß wird das Handrefraktometer in ein Kreuzstück einer Rohrleitung eingebaut.

In der erfindungsgemäßen Ausführung mittels Kreuzstück, können die zwei Öffnungen in 1" Innengewinde mit einem Zulauf und einem Ablauf versehen werden. Dabei kann mittels Pumpe das zu messende Liquid durch das Kreuzstück gepumpt werden. Dabei strömt das Liquid um das Refraktometer-Prisma, so dass bei Einsehen in das Okular mit Gummi-Augenmuschel der Refraktometer-Wert abgelesen werden kann. Da das Tageslicht nur ungenügend in den Innenraum des Kreuzstücks einfällt kann die Trennlinie nicht erkannt werden. Es kann daher bevorzugt eine zusätzliche Beleuchtung des Innenraums des Kreuzstück und des Prismas vorgesehen sein.

Das Prisma wird bevorzugt stehend in der Vertikalen im Rohr bzw. im Kreuzstück platziert, so dass das aufströmende Liquid das Prisma in vorteilhafter Weise umspült.

In der erfindungsgemäßen Ausführung der Erfindung wird eine Lichtquelle unmittelbar an das Schauglas angebaut. Das Licht kann dann durch das stopfenartige Schauglas direkt auf das zugewandte Prisma des Refraktometers scheinen. So kann durch das Okular der Konzentrationswert abgelesen werden.

Bevorzugt ist die Beleuchtung als LED-Lampe ausgeführt, das hat den Vorteil, dass das Schauglas sich nur unwesentlich erwärmt. Damit die Lichtmenge und die Helligkeit im Messbereich auf das Medium angepasst werden kann, ist die Lichtleistung bevorzugt mittels Dimmer regelbar, insbesondere stufenlos regelbar. Des Weiteren kann die Lichtfarbe von z.B. gelb, grün, blau, rot oder weiß oder als Mischfarbe die Erkennung der Trennlinie im Refraktometer-Prisma verbessern.

In einer weiteren vorteilhaften Ergänzung der Erfindung kann die Einsicht in das Refraktometer über das Okular mittels Kamera erfolgen. Das Bild kann über einen Bildschirm angezeigt werden, so dass der Bediener den aktuellen Konzentrationswert angezeigt bekommt. Dieses Bild zeigt bevorzugt eine Lichtsäule mit zwei unterschiedlichen Farbbereichen, die eine unterschiedliche Licht-Intensität aufweisen. Die Farbunterschiede kommen von der LED-Lampenart und der Auswahl der Lichtfarbe.

Bei einem geeigneten Anströmwinkel kann sich das Prisma in vorteilhafter Weise von selber reinigen. Wenn keine Strömung durch die KSS besteht, kann es zu Ablagerungen, die die Messung beeinträchtigen, kommen. Bevorzugt kann eine Art Lotus-Effekt Lösung auf das Prisma aufgetragen werden, die das Wasser besser auf Scheiben ablaufen lässt, wodurch das Prisma länger sauber bleibt.

Bevorzugt ist die Verwendung eines Refraktometers mit einer Auflösung von 0 bis 18 Brix, das bei spezifischen Anwendungen besser funktioniert als eines mit einer Auflösung von 0-10 %. Möglicherweise hängt dies mit dem entsprechenden inneren Spiegel zusammen.

In einer weiteren vorteilhaften Ausführung der Lichtquelle kann die Intensität des Lichts und der damit verbundenen Lux-Zahl bei einer Verschmutzung des Prismas und oder des Schauglases erhöht werden, wodurch das Abreinigen hinausgezögert werden kann.

Ein bevorzugter Aufbau der Erfindung ist, wenn das Kreuzstück horizontal und vertikal ausgerichtet ist. Dabei ist der Zulauf vertikal von unten, abgewandt der Schwerkraft. Der Ablauf ist um 90° versetzt, bevorzugt in die Horizontale. Das Prisma vom Refraktometer kann in die Horizontale oder in die Vertikale von oben im Kreuzstück platziert werden. Das Schauglas steht immer gegenüber dem Prisma. Wichtig hierbei ist, dass die Luft mit der Liquidströmung ausgetragen wird, da diese den Lichteinfall und die Messung beeinträchtigen kann.

Die vorliegende Erfindung betrifft dementsprechend insbesondere auch:
Die vorliegende Erfindung betrifft insbesondere ein Inline-Refraktometer, aufweisend ein Prisma, ein Okular und eine Skala gemäß Anspruch 1.

Bevorzugt ist in das Refraktometer kein CCD-Sensor integriert.

Erfindungsgemäß ist das Inline-Refraktometer einem Kreuzstück einer Rohrleitung zugeordnet.

Bevorzugt ist dem Inline-Refraktometer eine Kamera zum Ablesen des auf der Skala angezeigten Messwertes zugeordnet.

Erfindungsgemäß ist dem Inline-Refraktometer eine Lichtquelle, insbesondere eine LED Lampe zugeordnet. Bevorzugt ist eine Lichtquelle, insbesondere eine LED Lampe in das Kreuzstück der Rohrleitung integriert.

Bevorzugt ist das Inline-Refraktometer Bestandteil einer Maschine, insbesondere mit einer Rohrleitung.

Bevorzugt ist das Inline-Refraktometer Bestandteil einer Kühlschmierstoffleitung, insbesondere einer Kühlschmierstoffleitung einer Zerspanungsmaschine.

Die vorliegende Erfindung betrifft auch die Verwendung eines Handrefraktometers als Inline-Refraktometer in einer erfindungsgemäßenInline-Refraktometer-Einheit.

Die vorliegende Erfindung betrifft auch eine Maschine, aufweisend ein Leitungssystem, insbesondere Rohrleitungssystem, wobei das Leitungssystem ein erfindungsgemäße Inline-Refraktometer-Einheit aufweist.

Die vorliegende Erfindung betrifft auch eine Zerspanungsmaschine, aufweisend ein Leitungssystem zum Abführen und Zuführen eines Kühlschmierstoffs, wobei das Leitungssystem eine erfindungsgemäße Inline-Refraktometer-Einheit aufweist.

Die vorliegende Erfindung betrifft auch ein Verfahren zum Dosieren einer Komponente eines Gemisches aus mindestens zwei Flüssigkeiten in einem Leitungssystem, aufweisend die Schritte:
a) Messen des Brixwertes des Gemisches aus mindestens zwei Flüssigkeiten im Leitungssystem mit einer erfindungsgemäßen Inline-Refraktometer-Einheit, und
b) Zugeben von einem bestimmten Menganateil der einen Komponente bei Erreichen eines Schwellen-Brixwertes.

Die vorliegende Erfindung betrifft auch ein Verfahren zum Dosieren des Wasseranteils oder des Ölanteils eines Gemisches in einem Leitungssystem, aufweisend die Schritte:
a) Messen des Brixwertes des Gemisches im Leitungssystem mit einer erfindungemäßen Inline-Refraktometer-Einheit, und
b) Zugeben von einem bestimmten Menganateil Wasser oder Öl bei Erreichen eines Schwellen-Brixwertes.

Die vorliegende Erfindung betrifft auch ein Verfahren zum Dosieren eines Kühlschmierstoffs in einer Zerspanungsmaschine, aufweisend die Schritte:
a) Messen des Brixwertes des Kühlschmierstoffs im Leitungskreislauf der Zerspanungsmaschine mit einer erfindungsgemäßen Inline-Refraktometer-Einheit, , und
b) Zugeben von zusätzlichem Kühlschmierstoff oder von Wasser bei Erreichen eines Schwellen-Brixwertes.

In einer bevorzugten Ausführungsform der erfindungsgemäßen Verfahren erfolgt die Messung in Schritt a) über eine an dem Okular des Refraktometers befindliche Kamera und die Auswertung des Messwerts erfolgt über einen an der Kamera angeschlossenen Computer, wobei besonders bevorzugt das Zugeben von der zusätzlichen Komponente, dem Wasser, dem Öl oder dem zusätzlichem Kühlschmierstoff in Schritt b) über den Computer gesteuert wird.

### Gewerbliche Anwendbarkeit

Konzentrationsmessungen werden in zahlreichen Anwendungen eingesetzt, die Inline-Messtechnik ist sehr teuer und wird daher nur in wenigen Prozessen umgesetzt. Eine günstige Konzentrationsmessung kann in zahlreichen Prozessanlagen in der Zerspanungsindustrie eingesetzt werden, da Kreisläufe vorhanden sind. Hierbei ergibt sich ein großer Vorteil für den Betreiber, da beim Zerspanen vorwiegend Wasser verdunstet und dadurch die Konzentration stetig steigt. Mittels automatischer Überwachung der Konzentration kann eine automatische Regelung der Konzentration betrieben werden.

Weitere bevorzugte ausführungsformen ergeben sich aus den Unteransprüchen.

### Beispiele

Fig. 1 zeigt eine Seitenansicht des erfindungsgemäßen Inline-Refraktometers und dessen Bauteile in Ausführung als Seitenansicht.
Fig. 2 eingerahmt und gestrichelt unter Punkt 1. zeigt eine Schnittansicht der erfindungsgemäßen Inline-Refraktometer-Einheit als manuelle Bauform in der Schnittansicht und eingerahmt und gestrichelt unter Punkt 2. eine Schnittansicht der erfindungsgemäßen Inline-Refraktometer-Einheit mit optischer Kamera in der Schnittansicht.
Fig. 3 zeigt den Strömungsverlauf in der Aufwärtsströmung der erfindungsgemäßen Inline-Refraktometer-Einheit mit optischer Kamera- und Computer-Auswertung in der Schnittansicht der Refraktometer-Einheit.

Im Folgenden wird die Erfindung anhand der in den Zeichnungen dargestellten Ausführungsbeispiele weiter erläutert und beschrieben, ohne dass diese einschränkend zu verstehen wären.

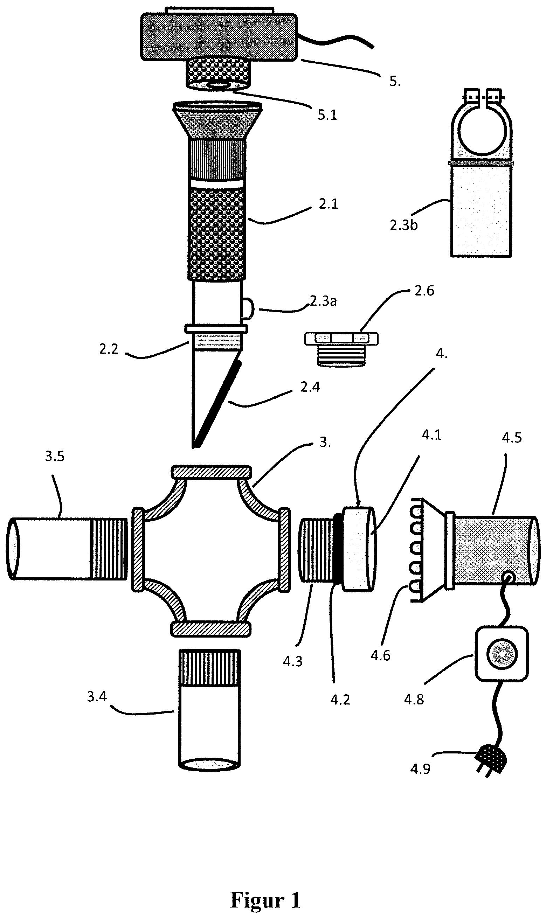

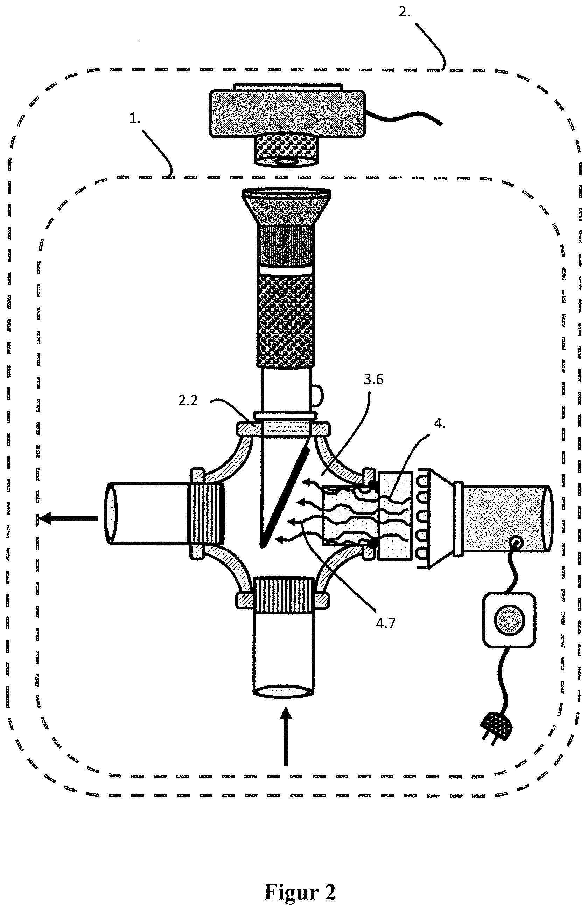

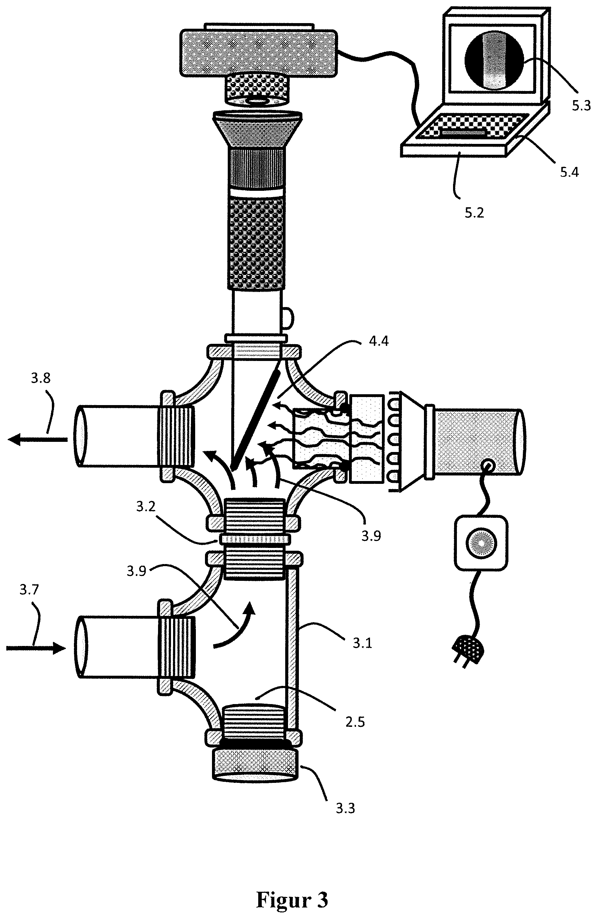

In den Figuren 1, 2 und 3 wird eine erfindungsgemäße Refraktometer-Einheit 1 gezeigt, die zusammen mit einer Kamera 5 eine Refraktometer-Einheit mit Kamera 2 bilden kann. Zu sehen ist ein Ausschnitt eines Leitungssystems zum Transport eines Kühlschmierstoffs einer Zerspanungsmaschine. In die Leitung ist ein Kreuzstück 3 und wahlweise (Figur 3) ein T-Stück 3.1 integriert. Somit ergibt ein Zulauf des Kühlschmierstoffs durch einen Rohranschluss 3.4 und einen Ablauf des Kühlschmierstoffs durch einen Rohranschluss 3.5, also eine Fließrichtung des Liquids 3.6 vom Flüssigkeitszulauf 3.7 durch das Kreuzstück 3 und das fakultative T-Stück 3.1 zur Ablaufrichtung 3.8, sodass sich der gezeigte Strömungsverlauf 3.9 ergibt.

In das Kreuzstück 3 ist über eine Gewindeverbindung 2.2 ein Handrefraktometer 2.1 eingeschraubt, sodass das Prisma 2.4 des Handrefraktometers 2.1 in das Kreuzstück 3 hineinreicht. Eine Einstellung kann über den Einstellring (Justierschraube) 2.3a erfolgen. Um das Handrefraktometer 2.1 in das Kreuzstück 3 hineinschrauben zu können, wurde die Prisma-Abdeckung 2.3b entfernt. Der Einbau des Handrefraktometers 2.1 in das Kreuzstück 3 kann beispielsweise auch über einen geeigneten Gewinde-Adapter 2.6 erfolgen.

In die um 90° versetzte Öffnung des Kreuzstücks 3 ist ein Schauglas 4 über ein Gewinde 4.3 eingeschraubt und verschließt mit einer Dichtung 4.2 die Öffnung. Durch den Lichteinfallspunkt 4.1 des Schaumglases kann Licht 4.7 in Richtung des Prismas 2.4 über den Schauglas-Prisma-Abstand 4.4 einfallen. Das Licht kann von einer Beleuchtung 4.5 kommen, im vorliegenden Fall ein LED-Leuchtkörper 4.6. In vorteilhafter Weise weist der Stromanschluss 4.9 der Beleuchtung 4.5 einen Lichtstärkeregler 4.8 als Dimmer auf um die gewünschte Lichtstärke einstellen zu können.

Dem Handrefraktometer 2.1 kann eine Kamera 5 mit einer Kameralinse 5.1 zugeordnet sein. Das von der Kameralinse 5.1 aufgenommene Refraktometer-Bild 5.3 kann an einen Computer 5.2 geleitet werden, wo eine Bilddatenanalyse 5.4 erfolgt.

In Figur 3 ist ein fakultatives T-Stück 3.1 gezeigt, dass über einen Gewinde-Nippel 3.2 mit dem Einlauf des Kreuzstücks 3 verbunden ist. Durch dieses T-Stück 3.1 wird ein mit einem Blindstopfen 3.3 verschließbarer Prisma-Reinigungszugang 2.5 in vorteilhafter Weise bereitgestellt.

In einer vorteilhaften Ausführung der Erfindung wird in den Zu- oder Ablauf ein T-Stück 3.1 (gleiche DIN wie Kreuzstück 3) mittels Gewinde-Nippel 3.2 vorgeschaltet. Dabei wird der bauchseitige T-Stück-Anschluss als Zu- 3.7 oder Ablauf 3.8 verwendet. Die T-Stück-Durchgangsseite wird zum Reinigen des Prismas 2.4 und des Schauglas 4 verwendet. Dabei können mittels Reinigungsstab oder Reinigungsdüse usw. von außen die Anhaftungen auf dem Prisma 2.4 und dem Schauglas 4 entfernt werden. Bei Betrieb verschließt dann ein Stopfen 3.3 oder ein Kugelhahn usw. den T-Stück-Zugang.

In einer vorteilhaften Ausführung des Schauglases 4 kann die Entfernung 4.4 zwischen dem Prisma 2.4 und dem Schauglas 4 angepasst werden. Hierbei wird die eine Länge des Schauglases 4 (wie beschrieben) z.B. 20 mm auf z.B. 23 mm verlängert oder verkürzt auf z.B. 17 mm. Das wiederum erlaubt den Einsatz von unterschiedlichen Produkten die unterschiedliche Lichtdurchlässigkeit haben können.

Das Prisma 2.4 wird bevorzugt stehend in der Vertikalen im Rohr bzw. im Kreuzstück 3 platziert, so dass das aufströmende Liquid 3.6 das Prisma 2.4 umspült. Hierbei sollte sich kein Strömungsschatten bilden, da sich sonst ein Konzentrationsgefälle zwischen dem fließenden und stehendem Liquid bildet.

Beispielhaft ist vorliegend eine Leitung zum Transport eines liquiden Kühlschmierstoffs 3.6 einer Zerspanungsmaschine gezeigt. Jedoch kann die vorliegende Erfindung natürlich auch bei anderen Leitungen genutzt werden, die andersartige Flüssigkeiten (Liquid 3.6) transportieren.

In einer daraus resultierenden vorteilhaften Erfindung kann also auch mittels computerunterstützter Software 5.4 die Bild-Lichtsäule 5.3 vermessen werden, so dass z.B. der Nullpunkt 0 und 10 als Höchstwert vermessen wird. Ist das zu messende Gesamtbild 100 mm hoch oder lang kann je 1 mm von einer Konzentrationserhöhung von 0,1 % ausgegangen werden. Das angezeigte Bild zeigt einen Licht-Farbumschlag von meist hell auf dunkel an. Begonnen vom Nullpunkt (0), verändert sich das Licht- oder Farbbild z.B. bei 66 mm dann kann der Konzentrationswert auf 6,6 % angegeben werden. Eine weitere Messmethode ist auch eine Flächenvergleichsmessung, dabei wird eine rechteckige Fläche, beginnend beim Nullpunkt und enden beim Höchstwert von z.B. 10 mit einer Breite von z.B. 40 mm über das Bild gelegt dann entsteht eine Oberfläche von 100 mm x 40 mm = 4.000 m². Bei einem Flächenvergleich von 2640 m² hell und 1360 m² dunkel oder andersfarbig erhalten wir einen Flächenvergleichswert von 66 zu 34 % und damit wieder 6,6 % Konzentration.

Die daraus resultierenden Messungen ermöglichen eine SPS-gesteuerte Konzentrationsregelung. Wird z.B. ein Konzentrationswert bei Kühlschmierstoffen oder auch Emulsion, wie diese bei der Zerspanungsindustrie üblicherweise eingesetzt werden, überwacht und angepasst, kann bei einem Sollwert von 6 % und der Flächenüberschreitung des hellen Bereichs bei der Nach-Dosage mit einer geringen Konzentration aufgefüllt werden. Umgekehrt kann bei einer Unterschreitung der helleren Fläche als 6% eine höhere Konzentration bei der Nach-Dosage die Konzentration ausgleichen. Aber auch reines Wasser und Konzentrat sind möglich, wenn diese in den Emulsionsstrom eindosiert und einemulgiert werden.

Es zeigte sich, dass eine frisch angesetzte Emulsion noch klar und Lichtdurchlässig ist und erst im Einsatz in der Zerspanungsmaschine wurde diese immer weißer und vermutlich spielen auch Partikel eine Rolle bei der Reflektion und dem Brechungsindex des Lichts.

Dabei hat sich eine LED Lampe bewährt, da auch die Wärmeabstrahlung gering war. Auch ließ sich die Bildfarbe und die Trennfarben anhand der Lichtquellenfarbe beeinflussen (2 verschiedene Bildfarben). Am besten funktionierte eine warme Lichtquelle (weis warm), wobei die Lichtleistung dabei bei 12 Volt etwa 5 Watt betrug. Auch Licht mit rotem Anteil funktionierte sehr gut.

Es wurde folgender Versuchsaufbau getestet:
In einer vorteilhaften Ausführung der Erfindung wird der Prisma-Deckel 2.3b, gehalten durch eine Art "Ring-Ösen-Klemmung", entfernt. Die Befestigungsstelle der Ring-Ösen-Klemmung ist zylindrisch. Die Stelle liegt zwischen dem Prisma 2.4 und der Justierschraube 2.3a, die zur Nullwert-Abgleichung mittels Wasser verwendet wird. Die zylindrische Befestigungsstelle zwischen dem Prisma 2.4 und der Justierschraube 2.3a ist üblicher Weise etwa 5 - 10 mm lang. Der Durchmesser ist etwa 24 mm, das ermöglicht ein Aufschneiden eines sogenanntes und bevorzugten Metrischen ISO-Feingewindes DIN 13. mittels Schneideisen M24 x 1,5 Feingewinde HSS DIN ISO 13.

In der daraus resultierenden vorteilhaften Ausführung mit Gewinde kann ein Gewinde-Übergang auf das Refraktometer geschraubt und mittels Dichtmittel gedichtet werden. Der Gewinde-Übergang ist ein handelsübliches Reduzierstück 2.6 nach DIN 2999 in Ausführung 1" Außengewinde reduziert auf ½" Innengewinde. Das ½" Gewinde wird ausgebohrt und ein metrisches ISO-Feingewinde wird mittels Gewindebohrer M24 x 1,5 Feingewinde HSS DIN ISO 13 eingeschnitten. Die Art, Dimension und die Abmessung des Gewindeübergangs wird an den Prozess angepasst und ist unabhängig von der erfinderischen Umsetzung. Das Refraktometer 2.1, mit dem abgedichteten Gewindeübergang 2.2 mit 1" Außengewinde, wird in ein Kreuzstück 3 (bevorzugt gleiche DIN 2999) eingeschraubt und gedichtet. Das bevorzugte Dichtmittel ist ein flüssiges Gewindedichtmittel z.B. Loctite Typ 572. Es kann aber auch ein anderes Dichtmittel sein, das für die jeweilige Flüssigkeit zugelassen ist.

In einer weiteren vorteilhaften Ausführung der Erfindung wird aus einem Rundstab, z.B. DN 40 aus Acryl oder dergleichen aus transparentem Werkstoff, auch Glas ist möglich, ein Schauglas 4 gefertigt. Das Schauglas 4 wird in einer Länge von etwa 30 mm gefertigt. Der Durchmesser (DN) 40 mm wird auf einer Länge von 20 mm auf DN 33 mm abgedreht und dann mit einem 1" Außengewinde (gleich wie Kreuzstück Innengewinde nach DIN 2999) versehen. Das Gewinde kann ebenso mittels Gewindeschneideisen aufgeschnitten werden. Das Schauglas hat dann eine Ähnlichkeit mit einem Sanitärstopfen in 1", mit der Eigenschaft eine Lichtquelle 4.5,4.6, 4.7 hindurchzuleiten. Dieser schauglasartige Stopfen wird im 90° Winkel zum Refraktometer 1 in das Kreuzstück 3 eingeschraubt. Als Dichtmittel 4.2 wird eine Flach- oder O-Ring-Dichtung verwendet, da bei Verschmutzung des 1" gewindeseitigen Ende das Schauglas 4 herausgeschraubt und gereinigt werden kann/muss. Das 10 mm lange und DN 40 Äußere des Schauglas 4 (kann auch ein anderes Maß haben) und kann händisch auf des Kreuzstück 3 aufgedreht werden, so dass die Verbindung im Kreuzstück 3 gedichtet ist.

Realisiert wurde auch der Einsatz eines Glasfläschchens als Schauglas, dass in eine metallische 1" Gewindehülse eingeklebt wurde. Das handelsübliche Glasfläschchen hatte einen Außendurchmesser von 28 mm und ragte 15 mm aus der Gewindehülse in das Kreuzstück. Es hatte sich bei der weißlichen Emulsion des Kühlschmierstoffs gezeigt, dass die Lichtfarbe bei Rot die Erkennung des Brechungsindex im Refraktometer begünstigt. Das kann sich aber bei einer anderen Fluidfarbe verändern. Hierzu wurde das Glasfläschchen innen mit transparenter roter Glasfarbe besprüht. Dazu wurde das Glasfläschchen zuvor auf 60°C erwärmt und mittels motorischen Antriebs in der vertikalen Achse gesehen (beim stehenden Glasfläschchen) in der horizontalen eingespannt und dann eingefärbt. Hierbei entstand ein gleichmäßiger transparenter Farbfilm. In den Deckel des Glasfläschchens wurde eine Kabelverschraubung eingebaut, diese dichtete den Innenraum in dem eine LED-Lampe mit warmem Weißlicht eingesetzt wurde, ab. Da die LED-Lampe direkt an den Boden des Glasfläschchens anstand wurde das Licht auch im 15 mm langen Umfang in den Innenraum der Kreuzstücks verteilt. Dadurch entstand eine homogene Lichtquelle auf dem Prisma. Da das Liquid in seiner Licht-Adsorption unterschiedlich sein kann und das von der Zusammensetzung und Belastung von Partikeln abhängig sein kann, konnte die Lichtstärke variabel angepasst werden. Das erfolgte manuell oder automatisch nach Bildauswertung.

Das optische Bild, welches in dem Refraktometer und auf der Linse entsteht, wurde mittels Kamera aufgenommen. Dabei wurde die Kamera so platziert, dass das Bild den gesamten Prismabereich im Refraktometer aufnimmt. Die Bildauflösung und die Bildschärfe wurde am Okular fest eingestellt. Dabei wurde die Kamera bevorzugt nicht parallel in der Achse zum Okular platziert, sondern leicht gekippt. Eine Verkippung um etwa 1° verbesserte die Sicht der Lichtbrechung.

Kameras haben zur Erkennung des Bilds unterschiedliche Lichtpunkte, dabei werden z.B. 2-10 Mil. Bildpixel in unterschiedlichen Lichtfarben aufgenommen. Dabei besteht auch die Möglichkeit ein Schwarz-Weiß-Bild zu erstellen. Kameras haben auch ein voreingestelltes Bildformat, das sich auf eine Fläche projiziert. Der voreingestellte Bildausschnitt hatte im vorliegenden Versuchsaufbau eine Fläche von z.B. Bildauflösung bis 8 Megapixeln (3.280 x 2.464 Pixel) Diese Bildfläche zeigt im Vordergrund das Lichtbild des Prismas, sowie die Dunkelfläche um das Prisma. Da die die Pixelverteilung auf der gesamten Bildfläche war, wurde für die Bildanalyse nur der Bereich des Prismas benötigt.

Das Gesamtbild war etwa 10 x 10 cm groß und beinhaltete etwa 8 Mil. Bildpixel, das auszuwertende Prismabild nahm dabei einen Bildanteil von 5 x 2 cm ein. Der Bild-Ausschnitt vom Prisma war elliptisch und zeigte eine Skala von 0-Brix 18 Brix. Die daraus resultierende Fläche reduzierte sich auf 640.000 Bildpixel. Eine Hell-Dunkelgrenze entsteht im Verlauf der Bildbrechung aufsteigend von 0 % bist 18 %. Bei einem Wert von 6% ergibt sich zum Beispiel ein Anteil von 6% helle Pixel zu 12% dunkle Pixel, was in der Fläche einen Anteil von 33,33 % zu 66,66% ergibt, bzw. 213.333 helle Pixel zu 426.666 dunkle Pixel. Dieses Verhältnis wurde dann bezogen auf die Anzeige von 0-18 % umgerechnet.

Dieses prozentuale Verhältnis wurde dann in einem weiteren Programmschritt umgerechnet und an die SPS (speicherprogrammierbare Steuerung) als Signal von 0-10 Volt, bevorzugt von 4-20 mA gesendet. Dabei war 0% gleich 4 mA und 18% gleich 20 mA. Bei 6% war dementsprechend ein Signalstrom von 9,33 mA vorhanden, was durch die SPS abgelesen wurde.

Ein Raspberry Pi als einfachen Computer wurde vorliegend zur Bilderkennung eingesetzt, und der Bildausschnitt dementsprechend von 0- 18% wurde ausgeschnitten und dann als Maßeinheit von 0 - 18 in 0 -18 % umgerechnet, so dass bei den Lichtpunkten die Berechnung und die Farbunterschiede und damit die Trennlinie ausgewertet werden konnten. Dies wurde dann in ein Signal von 4 - 20 mA umgerechnet, z.B. waren 4 mA = 0 % und 20 mA = 18%.

Besser als ein Handrefraktometer mit einer Skala 0-10 funktionierte ein Handrefraktometer mit einer Skala von 0- 18, da hier wohl ein anderes Prisma verbaut war und die Trennlinie besser zu erkennen war, was zu einer besseren Auswertung führte.

Das Online-Bild wurde an der Steuerung der Emulsions-Aufbereitungs-Anlage angezeigt. Hierfür wurde ein Comfort Panel von Siemens eingesetzt, Das dann dem Bediener rein zur optischen Überwachung diente. Daraufhin wurde das Bild über eine Schnittstelle an einem beliebigen Computer angezeigt, so dass eine Online-Überwachung direkt am Arbeitsplatzt möglich war.

Es wurde eine Steuerung mit dem Analogwert eingestellt und dies zur Konzentrationsregelung des Kühlschmierstoffs verwendet. Es konnte Wasser oder Kühlschmierstoff-Konzentrat zugegeben werden. Auch konnte der Wert zur Dokumentation verwendet werden, da Betreiber häufig verpflichtet sind, diesen stetig zu überwachen.

Zur Dosierung wurden 1.000 L Kühlschmierstoff in einem Behälter, der zu einer oder auch mehreren Zerspanungsanlage zugeordnet war, in der Füllmenge überwacht. Dazu wurde die räumliche Größe des Behälters gemessen. Eine Niveausonde maß kontinuierlich den Füllstand. Beim Unterschreiten des Füllstands von z.B. 2 cm wurden dann etwa 22 L nachdosiert. Stieg dadurch die gemessene Konzentration auf 6,1 % an wurde nur mit Wasser nachdosiert.

Das Liquid, insbesondere der Kühlmittelschmierstoff, sollte in seiner Konsistenz fließfähig sein damit es sich nicht an der Oberfläche, dem Innenrohr, der Lichtquelle oder dem Prisma anhaftet. Das Liquid sollte in seiner Zusammensetzung homogen vermischt sein da sich sonst der Brechungsindex auf dem Prisma und der Erkennung stetig verändern kann und sich somit keine stabile Messung einstellt. Verklebt das Prisma mit Fetten oder haften Gasbläschen auf dem Prisma sollte das Prisma gereinigt werden. Hierfür kann im Intervall manuell oder automatisch gereinigt werden. Die Reinigung kann z.B. manuell mittels Reinigungstuch oder Pinsel erfolgen oder auch automatisch mittels Scheibenwischer, der mittels Pneumatik Zylinder an dem Prisma auf und ab oder hin und her fährt.

In der vorliegenden Erfindung werden die Begriffe Flüssigkeit, Liquid und Fluid gleichbedeutend verwendet.

Die vorliegende Erfindung ist somit eine vorteilhafte Alternative zu teuren herkömmlichen online Messgeräten, da bei diesen die Linse, meist nicht größer als 5 x 10 mm, sehr schnell verschmutzt und so weniger Licht durchdringt und die Elektronik dann einen zu hohen Konzentrationswert signalisiert. Eine automatische Abreinigung funktioniert bei den herkömmlichen Messgeräten auch eher schlecht da es sich um Graphit und Fett handelt.

Die erfindungsgemäße Alternative kann dagegen eine große Prisma-Fläche von etwa 20 x 45 mm haben, so dass der Licht-Brechungsindex bei einer belasteten Kühlschmierstoff wie auch bei einer sauberen Kühlschmierstoff gut messbar ist.

### Bezugszeichenliste

- 1.: Refraktometer Einheit manuell
- 2.: Refraktometer Einheit mit Kamera
- 2.1: Handrefraktometer
- 2.2: Gewinde-Verbindung
- 2.3a: Einstellring des Diopters
- 2.3b: Prisma-Abdeckung
- 2.4: Prisma
- 2.5: Prisma-Reinigungszugang
- 2.6: Gewinde-Adapter
- 3.: Kreuzstück
- 3.1: T-Stück
- 3.2: Gewinde-Nippel
- 3.3: Blindstopfen
- 3.4: Rohranschluss Zulauf
- 3.5: Rohranschluss Ablauf
- 3.6: Liquid
- 3.7: Liquid Zulauf
- 3.8: Liquid Ablauf
- 3.9: Strömungsverlauf
- 4.: Schauglas
- 4.1: Schauglas-Lichteinfall
- 4.2: Schauglas-Dichtung
- 4.3: Schauglas-Gewinde
- 4.4: Schauglas-Prisma-Abstand
- 4.5: Beleuchtung
- 4.6: LED-Leuchtkörper
- 4.7: Lichtwellen
- 4.8: Lichtstärken-Regler
- 4.9: Stromanschluss
- 5.: Kamera
- 5.1: Kamera-Linse
- 5.2: Computer
- 5.3: Refraktometer-Bild
- 5.4: Bild-Datenanalyse

## Patentansprüche

1. Inline-Refraktometer-Einheit (1) mit einem Kreuzstück (3), einer Rohrleitung und einem Refraktometer (2.1), das ein Prisma (2.4), ein Okular und eine Skala aufweist und so in das Kreuzstück eingebaut ist, dass das Prisma in das Kreuzstück hineinreicht, wobei eine Öffnung des Kreuzstücks ein Schauglas (4) aufweist und unmittelbar an das Schauglas eine Lichtquelle (4.5) angebaut ist, so dass Licht der Lichtquelle durch das Schauglas direkt auf das zugewandte Prisma scheint, oder wobei eine dem Refraktometer zugeordnete LED Lampe in das Kreuzstück integriert ist.

2. Inline-Refraktometer-Einheit nach Anspruch 1 mit einer Kamera (5) zum Ablesen des auf der Skala angezeigten Messwertes.

3. Inline-Refraktometer-Einheit nach einem der vorhergehenden Ansprüche, wobei das Kreuzstück Bestandteil einer Kühlschmierstoffleitung, insbesondere einer Kühlschmierstoffleitung einer Zerspanungsmaschine ist.

4. Verwendung eines Handrefraktometers als Refraktometer in einer Inline-Refraktometer-Einheit nach einem der Ansprüche 1 bis 3.

5. Maschine, aufweisend ein Leitungssystem, wobei das Leitungssystem eine Inline-Refraktometer-Einheit nach einem der Ansprüche 1 bis 3 aufweist.

6. Maschine nach Anspruch 5, wobei die Maschine eine Zerspanungsmaschine ist, aufweisend ein Leitungssystem zum Abführen und Zuführen eines Kühlschmierstoffs, wobei das Leitungssystem zum Abführen und Zuführen eines Kühlschmierstoffs eine Inline-Refraktometer-Einheit nach einem der Ansprüche 1 bis 3 aufweist.

7. Verfahren zum Dosieren einer Komponente eines Gemisches aus mindestens zwei Flüssigkeiten in einem Leitungssystem, aufweisend die Schritte:
a) Messen des Brixwertes des Gemisches aus mindestens zwei Flüssigkeiten im Leitungssystem mit einer Inline-Refraktometer-Einheit nach einem der Ansprüche 1 bis 3,
b) Zugeben von einem bestimmten Mengenanteil der einen Komponente bei Erreichen eines Schwellen-Brixwertes.

8. Verfahren nach Anspruch 7, wobei die eine Komponente der Wasseranteil oder der Ölanteil des Gemisches ist.

9. Verfahren nach Anspruch 7, wobei das Gemisch ein Kühlschmierstoff in einer Zerspanungsmaschine ist und wobei in Schritt b) zusätzlicher Kühlschmierstoff oder zusätzliches Wasser zugegeben wird.

10. Verfahren nach einem der Ansprüche 7 bis 9, wobei die Messung in Schritt a) über eine an dem Okular des Refraktometers befindliche Kamera erfolgt und die Auswertung des Messwerts über einen an der Kamera angeschlossenen Computer erfolgt, wobei das Zugeben von der zusätzlichen Komponente, dem Wasser, dem Öl oder dem zusätzlichem Kühlschmierstoff in Schritt b) über den Computer gesteuert wird.

## Claims

1. An inline-refractometer unit (1) with a crosspiece (3), a pipeline and a refractometer (2.1), which has a prism (2.4), an eyepiece and a scale and is installed in the crosspiece such that the prism extends into the crosspiece, wherein an opening of the crosspiece has a sight glass (4) and a light source (4.5) is mounted immediately on the sight glass, such that light from the light source shines through the sight glass directly onto the facing prism, or wherein an LED lamp associated with the refractometer is integrated into the crosspiece.

2. The inline-refractometer unit of claim 1 with a camera (5) for reading the measurement value indicated on the scale.

3. The inline-refractometer unit of any one of the preceding claims, wherein the crosspiece is part of a coolant line, in particular a coolant line of a machining machine.

4. A use of a hand-held refractometer as the refractometer in an inline-refractometer unit of any one of claims 1 to 3.

5. A machine having a line system, wherein the line system has an inline-refractometer unit of any one of claims 1 to 3.

6. The machine of claim 5, wherein the machine is a machining machine having a line system for discharging and supplying a coolant, wherein the line system for discharging and supplying a coolant has an inline-refractometer unit of any one of claims 1 to 3.

7. A method for dosing a component of a mixture of at least two liquids in a line system, having the steps of:
a) measuring the Brix value of the mixture of at least two liquids in the line system with an inline-refractometer unit of any one of claims 1 to 3,
b) adding a specified quantity proportion of the one component when a threshold Brix value is reached.

8. The method of claim 7, wherein the one component is the water proportion or the oil proportion of the mixture.

9. The method of claim 7, wherein the mixture is a coolant in a machining machine and wherein, in step b), additional coolant or additional water is added.

10. The method of any one of claims 7 to 9, wherein the measurement in step a) is performed via a camera located at the eyepiece of the refractometer and the evaluation of the measurement value is performed via a computer connected to the camera, wherein the addition of the additional component, the water, the oil or the additional coolant in step b) is controlled via the computer.

## Revendications

1. Une unité de réfractomètre en ligne (1) avec une pièce en croix (3), une conduite et un réfractomètre (2.1), lequel a un prisme (2.4), un oculaire et une échelle et est monté dans la pièce en croix de telle sorte que le prisme s'étende dans la pièce en croix, dans laquelle une ouverture de la pièce en croix a un verre-regard (4) et une source lumineuse (4.5) est montée immédiatement sur le verre-regard, de telle sorte que la lumière de la source lumineuse brille, à travers le verre-regard, directement sur le prisme tourné vers celle-ci, ou dans laquelle une lampe LED associée au réfractomètre est intégrée dans la pièce en croix.

2. L'unité de réfractomètre en ligne selon la revendication 1, avec une caméra (5) destinée à lire la valeur mesurée indiquée sur l'échelle.

3. L'unité de réfractomètre en ligne selon l'une quelconque des revendications précédentes, dans laquelle la pièce en croix fait partie d'une conduite de liquide de refroidissement, en particulier d'une conduite de liquide de refroidissement d'une machine d'usinage.

4. Une utilisation d'un réfractomètre manuel en tant que réfractomètre dans une unité de réfractomètre en ligne selon l'une quelconque des revendications 1 à 3.

5. Une machine ayant un système de conduites, dans laquelle le système de conduites a une unité de réfractomètre en ligne selon l'une quelconque des revendications 1 à 3.

6. La machine selon la revendication 5, dans laquelle la machine est une machine d'usinage ayant un système de conduites destiné à évacuer et à amener un liquide de refroidissement, dans laquelle le système de conduites destiné à évacuer et à amener un liquide de refroidissement a une unité de réfractomètre en ligne selon l'une quelconque des revendications 1 à 3.

7. Un procédé de dosage d'un composant d'un mélange d'au moins deux liquides dans un système de conduites, ayant les étapes :
a) mesurer la valeur Brix du mélange d'au moins deux liquides dans le système de conduites avec d'une unité de réfractomètre en ligne selon l'une quelconque des revendications 1 à 3,
b) ajouter une proportion quantitative déterminée de l'un des composants lorsqu'une valeur Brix seuil est atteinte.

8. Le procédé selon la revendication 7, dans lequel l'un des composants est la proportion en eau ou la proportion en huile du mélange.

9. Le procédé selon la revendication 7, dans lequel le mélange est un liquide de refroidissement dans une machine d'usinage et dans lequel, à l'étape b), du liquide de refroidissement supplémentaire ou de l'eau supplémentaire est ajouté.

10. Le procédé selon l'une quelconque des revendications 7 à 9, dans lequel la mesure à l'étape a) est effectuée au moyen d'une caméra située sur l'oculaire du réfractomètre et l'évaluation de la valeur mesurée est effectuée au moyen d'un ordinateur raccordé à la caméra, dans lequel l'ajout du composant supplémentaire, de l'eau, de l'huile ou du liquide de refroidissement supplémentaire à l'étape b) est commandé au moyen de l'ordinateur.
